# EUROPÄISCHE PATENTANMELDUNG

(11) **EP 1 894 650 A1**
(43) Veröffentlichungstag der Anmeldung: **05.03.2008**
(21) Anmeldenummer: 07015930.6
(22) Anmeldetag: 14.08.2007
(51) Int. Cl.: B23B 31/00, B23B 31/11, B23B 31/20

(54) **Spannzangenreduktion mit Auszugsvorrichtung**

(30) Priorität: 30.08.2006 CH 13852006
(71) Anmelder: Rego-Fix AG, 4456 Tenniken (CH)
(72) Erfinder: Hartmann, Thomas, 4434 Höstein (CH)
(74) Vertreter: Braun, André jr.

(57) **Zusammenfassung**

Die Spannzangenreduktion (1) dient zum Einsetzen in eine Spannzangenaufnahme einer Werkzeugmaschine (2) und Befestigung mittels einer Befestigungsmutter (3). Sie ist zwischen ihrem maschinenseitigen Teil und ihrem werkzeugseitigen Teil an ihrer Aussenseite mit Aufnahmemitteln (6) zur Aufnahme eines sie ringförmig umgebenden Elements (7) versehen. An diesem Element (7) greift die Befestigungsmutter (3) an und zieht beim Abschrauben die Reduktion (1) aus der Aufnahme heraus.

## Beschreibung

Die Erfindung betrifft eine Spannzangenreduktion, die in einer Spannzangenaufnahme einer Werkzeugmaschine sitzt und mittels einer Befestigungsmutter fixiert ist.

Eine Spannzangenreduktion ist ein hohlzylindrisches, aus einem Stück gefertigtes Teil, das maschinenseitig mittels einer Befestigungsmutter in eine grössere Spannzangenaufnahme gespannt wird. Auf der Schneidwerkzeugseite ist sie als Spannzangenaufnahme für die Aufnahme von kleineren Spannzangen ausgebildet. Damit die Störkontur bei den Spannzangenreduktionen klein bleiben kann, werden dafür oft Befestigungsmuttern verwendet, die im Durchmesser viel kleiner sind als übliche Spannmuttern.

Für die Entnahme von Spannmuttern aus einem Spannzangenhalter (Futter) gibt es eine Vielzahl von Lösungen. Einige beruhen auf einwärts gerichteten Flanschen auf der Innenseite einer Spannmutter; andere auf Ringscheiben, die in innenseitig umlaufenden Nuten der Spannmutter angeordnet sind; bei wieder anderen besitzen die Spannmuttern an ihrer Innenseite ausgearbeitete Auszugslappen. Alle diese Elemente sind im Inneren der Spannmuttern angeordnet und greifen in Nuten in der eingesetzten Spannzange ein oder hintergreifen Flansche an der Spannzange.

Diese von Spannmuttern bekannten Lösungen mit inneren Auszugsvorrichtungen (z.B. Auszugslappen, Auszugsscheibe etc.) sind bei Spannzangenreduktionen nicht möglich.

Die Entnahme der Spannzangenreduktion erfolgt daher üblicherweise so, dass sie mittels Hammerschlägen und dergleichen frei "gerüttelt" werden muss. Diese Methode ist mit Nachteilen verbunden. Zum einen ist sie zeitraubend und braucht ein zusätzliches Werkzeug. Zum anderen werden die Spindel der Werkzeugmaschine mit der Spannzangenaufnahme bzw. der Spannzangenhalter mechanisch stark beansprucht.

Der Erfindung liegt die Aufgabe zugrunde, eine Lösung zum Beheben dieser Nachteile zu finden.

Erfindungsgemäss wird dies so gelöst, dass die Spannzangenreduktion zwischen ihrem maschinenseitigen Teil und ihrem werkzeugseitigen Teil an ihrer Aussenseite mit Aufnahmemitteln zur Aufnahme eines sie ringförmig umgebenden Elements versehen ist, dessen Aussendurchmesser grösser ist als der Innendurchmesser der Befestigungsmutter.

Beim Lösen der Befestigungsmutter greift deren Innenkante hinter das umgebende Element und zieht durch ihre axiale Bewegung die Spannzangenreduktion aus der Werkzeugaufnahme heraus.

Gemäss einer bevorzugten Ausführungsform der Erfindung ist ein Aufnahmemittel eine umlaufende Nut zur Aufnahme eines Seegerrings oder eines Sprengrings.

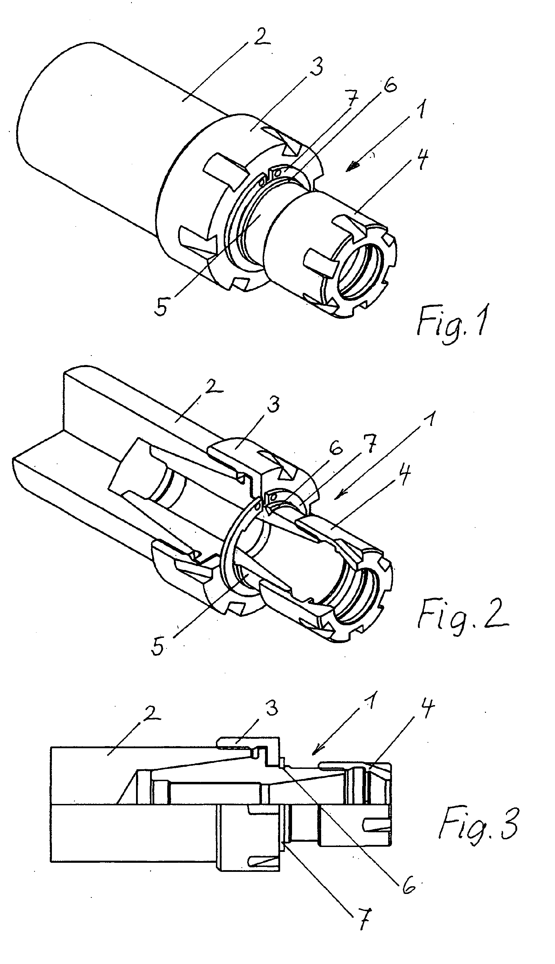

Im Folgenden werden anhand der beiliegenden Zeichnungen bevorzugte Ausführungsbeispiele der Erfindung beschrieben. Es zeigen
- Fig. 1: eine perspektivische Darstellung einer Spannzangenaufnahme mit einer eingesetzten Reduktion
- Fig. 2: eine perspektivische Darstellung derselben Spannzangenaufnahme, teilweise im Schnitt
- Fig. 3: eine achsparallele Ansicht, teilweise im Schnitt
- Fig. 4: eine perspektivische, teils geschnittene Darstellung einer alternativen Lösung
- Fig. 5: eine perspektivische, teils geschnittene Darstellung einer weiteren alternativen Lösung

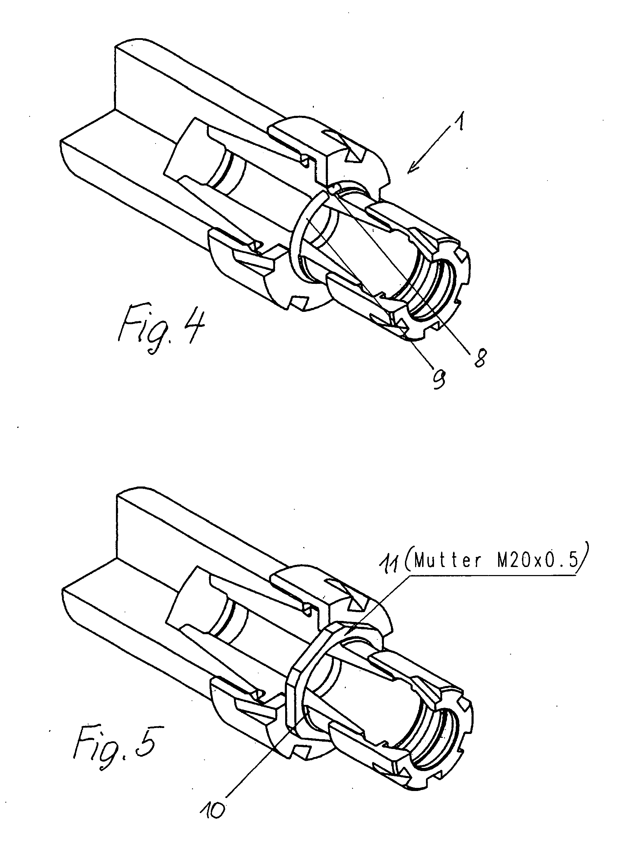

In eine Spannzangenhalterung (Spannfutter) 2 ist eine Spannzangenreduktion 1 eingesetzt und mit einer Befestigungsmutter 3 fixiert. Die Reduktion 1 hat ihrerseits eine Spannmutter 4, mit der eine kleinere Spannzange in ihr befestigt werden kann. Wie aus den Schnittdarstellungen der Fig. 2 und 3 ersichtlich, besitzt die Reduktion 1 wie eine Spannzange maschinenseitig einen Konus, der dem Konus der Spannzangenaufnahme entspricht und in diesem sitzt. Allerdings ist die Reduktion im Gegensatz zu einer Spannzange ein einstückiger starrer Körper.

Die Befestigungsmutter 3 hat einen kleinen Durchmesser, um das Störprofil der Anordnung möglichst gering zu halten. Das Montieren einer mit einer inneren Auszugsvorrichtung versehenen Mutter auf einer Spannzangenreduktion ist problematisch.

Die Spannzangenreduktion 1 besitzt zwischen dem Sitz der maschinenseitigen Befestigungsmutter 3 und der werkzeugseitigen Spannmutter 4 für die einzusetzende kleinere Spannzange eine, im vorliegenden Fall zylindrische Aussenfläche 5. In dieser ist, unmittelbar ausserhalb des Sitzes der Befestigungsmutter, eine umlaufende Nut 6 mit rechteckigem Querschnitt angebracht. In dieser Nut ist ein Seegerring 7 angeordnet. Wenn die Befestigungsmutter 3 von der Spannzangenaufnahme abgeschraubt wird, greift sie mit ihrer stirnseitigen Innenkante am Seegerring 7 ein und zieht die Reduktion aus der Aufnahme.

Bei der in Fig. 4 gezeigten alternativen Ausführungsform ist in der Aussenfläche unmittelbar ausserhalb des Sitzes der Befestigungsmutter 3 ebenfalls eine umlaufende Ringnut 8 angebracht, die aber einen kreisförmigen Querschnitt aufweist und der Aufnahme eine Sprengringes 9 dient, welcher dieselbe Funktion hat wie der Seegerring.

Bei der in Fig. 5 gezeigten weiteren Ausführungsform ist die Aussenfläche unmittelbar ausserhalb des Sitzes de Befestigungsmutter 3 mit einem Gewinde 10 versehen, auf das eine Mutter 11 aufgeschraubt ist, an welcher die Befestigungsmutter 3 beim Abschrauben angreift.

## Patentansprüche

1. Spannzangenreduktion zum Einsetzen in eine Spannzangenaufnahme einer Werkzeugmaschine und Befestigung mittels einer Befestigungsmutter, **dadurch gekennzeichnet, dass** die Spannzangenreduktion zwischen ihrem maschinenseitigen Teil und ihrem werkzeugseitigen Teil an ihrer Aussenseite mit Aufnahmemitteln zur Aufnahme eines sie ringförmig umgebenden Elements versehen ist, dessen Aussendurchmesser grösser ist als der Innendurchmesser der Befestigungsmutter.

2. Spannzangenreduktion nach Anspruch 1, **dadurch gekennzeichnet, dass** die Aufnahmemittel eine Nut zur Aufnahme eines Seeger- oder Sprengringes sind.

3. Spannzangenreduktion nach Anspruch 1, **dadurch gekennzeichnet, dass** die Aufnahmemittel ein Gewinde zum Aufschrauben einer Mutter sind.
